# EUROPEAN PATENT SPECIFICATION

(11) **EP 3 310 093 B1**
(45) Date of publication and mention of the grant of the patent: **30.10.2019**
(21) Application number: 15894726.7
(22) Date of filing: 20.08.2015
(51) Int. Cl.: H04W 28/10, H04W 28/02, H04W 28/08, H04L 12/813

(54) **TRAFFIC CONTROL METHOD AND APPARATUS**
VERKEHRSSTEUERUNGSVERFAHREN UND -VORRICHTUNG
PROCÉDÉ ET APPAREIL D'AIGUILLAGE DE TRAFIC

(30) Priority: 09.06.2015 CN 201510311763
(43) Date of publication of application: 18.04.2018
(73) Proprietor: ZTE Corporation, Shenzhen, Guangdong 518057 (CN)
(72) Inventor: LU, Ruiqiang, Shenzhen Guangdong 518057 (CN); SHI, Ying, Shenzhen Guangdong 518057 (CN); ZHOU, Dongping, Shenzhen Guangdong 518057 (CN)
(74) Representative: Tiburzi, Andrea
(86) International application number: PCT/CN2015/087687
(87) International publication number: WO 2016/197458

(56) References cited:
- EP-A1- 2 785 103
- CN-A- 101 651 967
- CN-A- 101 730 149
- CN-A- 102 802 214
- US-A1- 2008 031 212
- US-A1- 2008 205 358
- US-A1- 2009 268 631
- US-A1- 2012 185 586
- US-B2- 8 351 331

## Description

### Technical Field

This document relates to, but is not limited to, the field of network communications, in particular to a flow control method and apparatus.

### Background

With the rapid development of computer networks, a large number of new services and new application programs have appeared one after another, thus the current computer networks become information transmission platforms carrying multiple services and serving many different users. Meanwhile, in recent years, WiFi (Wireless Fidelity) technology has matured, and hotels, cafes, railway stations and other places with highly mobile crowds have provided free WiFi for people to work, play, and the like.

Currently, the flow control method for a wireless network is that the rate of a single user is not limited or a fixed bandwidth is allocated for each user. In the case of the method of not limiting the rate of a single user, for example, a user carrying out a P2P (Point-to-Point) application is likely to occupy most of the bandwidth, thus basic network operations of other users, such as opening e-mails and browsing webpages, will be very difficult. However, in the case of the method of allocating a fixed bandwidth for each user, the total bandwidth cannot be fully and effectively utilized when there are few users, thus wasting network resources.

Therefore, how to make full use of the total network bandwidth and enable each user to have a good Internet experience has become an urgent problem to be solved.

The document EP2785103A1 discloses a traffic control system for WLAN access points. The traffic control system works in dependence on a first input - user priority. This allows different service levels to be provided to different classes of customer. In addition the traffic control system polices and/or shapes traffic based on a second input - a modulation rate detector, which measures the modulation rate at which each connected client is sending its traffic, and uses it to indirectly cause fairer use of the available air interface capacity.

The document US 2012/0185586 A1 discloses a method of managing bandwidth, performed by a computing system. The system receives user-selected connection parameters associated with a subscriber device. The system associates a network identifier of the subscriber device with a group bandwidth policy, based on the user-selected connection parameters. The system stores, in computer-readable storage media, parameters associated with the group bandwidth policy, in association with the network identifier of the subscriber device. The system receives, at a gateway device, network communication data from the subscriber device.

### Summary

What is described below is a summary of the subject matter described in detail in this text. This summary is not intended to limit the protection scope of claims.

A flow control method and apparatus according to independent claims are provided. Further improvements and embodiments are provided in the dependent claims.

Also provided is a flow control method, including:
counting a number of rate-limited users among online users of an access device and the real-time flow rate of each online user;
determining whether the number of the rate-limited users is greater than a first threshold;
determining whether a total real-time flow rate of all the online users is greater than a second threshold if the number of the rate-limited users is not greater than the first threshold; and
limiting a rate of a rate-unlimited user with a maximum real-time flow rate among the online users if the total real-time flow rate is greater than the second threshold.

In an exemplary embodiment, limiting a rate of a rate-unlimited user with a maximum real-time flow rate among the online users includes:
setting a rate limit of the rate-unlimited user with the maximum real-time flow rate as a preset percentage of a total bandwidth of the access device, where a product of the preset percentage and the first threshold is equal to 100%.

In an exemplary embodiment, the flow control method further includes:
determining whether the number of the rate-limited users is greater than a third threshold if the number of the rate-limited users is greater than the first threshold;
determining whether the total real-time flow rate of all the online users is greater than the total bandwidth of the access device if the number of the rate-limited users is not greater than the third threshold; and
limiting rates of all the online users if the total real-time flow rate is greater than the total bandwidth of the access device, where a rate limit is a flow rate obtained by dividing the total bandwidth of the access device by a number of all the online users.

In an exemplary embodiment, the flow control method further includes:
determining whether the total real-time flow rate of all the online users is greater than the total bandwidth of the access device if the number of the rate-limited users is greater than the third threshold; and
limiting the rates of both a user with a maximum real-time flow rate among rate-unlimited users and a user with a minimum real-time flow rate among the rate-limited users if the total real-time flow rate is greater than the total bandwidth of the access device, where the flow limit is a flow limit set for the user with the minimum real-time flow rate among the rate-limited users.

In an exemplary embodiment, after an online user gets offline, the flow control method further includes:
determining whether the offline user is a rate-limited user;
determining whether a number of current rate-limited users is greater than the third threshold if the offline user is a rate-limited user;
determining whether the offline user is subjected to rate limiting together with another rate-limited user if the number of the current rate-limited users is greater than the third threshold; and
separately limiting a rate of a rate-limited user which is subjected to rate limiting together with another rate-limited user among the current rate-limited users if the offline user is not subjected to rate limiting together with another rate-limited user.

In an exemplary embodiment, the flow control method further includes:
determining whether the number of the current rate-limited users is greater than the first threshold if the number of the current rate-limited users is not greater than the third threshold; and
limiting the rates of all the online users if the number of the current rate-limited users is greater than the first threshold, where the rate limit is a flow rate obtained by dividing the total bandwidth of the access device by the number of all the online users.

Also provided is a flow control apparatus, including:
a counting module, configured to count a number of rate-limited users among online users of an access device and a real-time flow rate of each online user;
a first determining module, configured to determine whether the number of the rate-limited users is greater than a first threshold;
a second determining module, configured to determine whether a total real-time flow rate of all the online users is greater than a second threshold if the number of the rate-limited users is not greater than the first threshold; and
a first rate limiting module, configured to limit a rate of a rate-unlimited user with a maximum real-time flow rate among the online users if the total real-time flow rate is greater than the second threshold.

In an exemplary embodiment, the rate limiting module includes:
a setting module, configured to set a rate limit of the rate-unlimited user with the maximum real-time flow rate as a preset percentage of a total bandwidth of the access device,
where a product of the preset percentage and the first threshold is equal to 100%.

In an exemplary embodiment, the flow control apparatus further includes:
a third determining module, configured to determine whether the number of the rate-limited users is greater than a third threshold if the number of the rate-limited users is greater than the first threshold;
a fourth determining module, configured to determine whether the total real-time flow rate of all the online users is greater than the total bandwidth of the access device if the number of the rate-limited users is not greater than the third threshold; and
a second rate limiting module, configured to limit rates of all the online users if the total real-time flow rate is greater than the total bandwidth of the access device, where a rate limit is a flow rate obtained by dividing the total bandwidth of the access device by a number of all the online users.

In an exemplary embodiment, the flow control apparatus further includes:
a fifth determining module, configured to determine whether the total real-time flow rate of all the online users is greater than the total bandwidth of the access device if the number of the rate-limited users is greater than the third threshold; and
a third rate limiting module, configured to limit rates of both a user with a maximum real-time flow rate among rate-unlimited users and a user with a minimum real-time flow rate among the rate-limited users if the total real-time flow rate is greater than the total bandwidth of the access device, where the flow limit is a flow limit set for the user with the minimum real-time flow rate among the rate-limited users.

In an exemplary embodiment, the flow control apparatus further includes:
a sixth determining module, configured to determine whether an offline user is a rate-limited user;
a seventh determining module, configured to determine whether a number of current rate-limited users is greater than the third threshold if the offline user is a rate-limited user;
an eighth determining module, configured to determine whether the offline user is subjected to rate limiting together with another rate-limited user if the number of the current rate-limited users is greater than the third threshold; and
a fourth rate limiting module, configured to separately limit a rate of a rate-limited user which is subjected to rate limiting together with another rate-limited user among the current rate-limited users if the offline user is not subjected to rate limiting together with another rate-limited user.

In an exemplary embodiment, the flow control apparatus further includes:
a ninth determining module, configured to determine whether the number of the current rate-limited users is greater than the first threshold if the number of the current rate-limited users is not greater than the third threshold; and
a fifth rate limiting module, configured to limit the rates of all the online users if the number of the current rate-limited users is greater than the first threshold, where the rate limit is a flow rate obtained by dividing the total bandwidth of the access device by the number of all the online users.

Also provided is a computer storage medium which stores computer-executable instructions for executing the foregoing method.

Through the forgoing schemes of the embodiments of the present invention, the beneficial effects of the embodiments of the present invention are as follows:
According to the flow control method and apparatus in the embodiments of the present invention, the number of rate-limited users among online users of the access device can be counted, and the rate of the rate-unlimited user with the maximum real-time flow rate among the online users is limited according to the total real-time flow rate of all the online users. Both the problem that a single user occupies a larger bandwidth and the problem that the bandwidth cannot be fully utilized when there are few users can be avoided, and all online users can take full advantage of the total bandwidth of the access device, thus improving the user experience.

Other aspects will become apparent upon reading and understanding the drawings and detailed description.

### Brief Description of Drawings

FIG. 1 is a flowchart of a flow control method according to an embodiment of the present invention.
FIG. 2 is a flowchart of another flow control method according to an embodiment of the present invention.
FIG. 3 is a flowchart of a yet another flow control method according to an embodiment of the present invention.
FIG. 4 is a schematic structural diagram of a flow control apparatus according to an embodiment of the present invention; and
FIG. 5 is another schematic structural diagram of the flow control apparatus according to an embodiment of the present invention.

### Detailed Description

Specific embodiments will be described below in further detail with reference to the accompanying drawings.

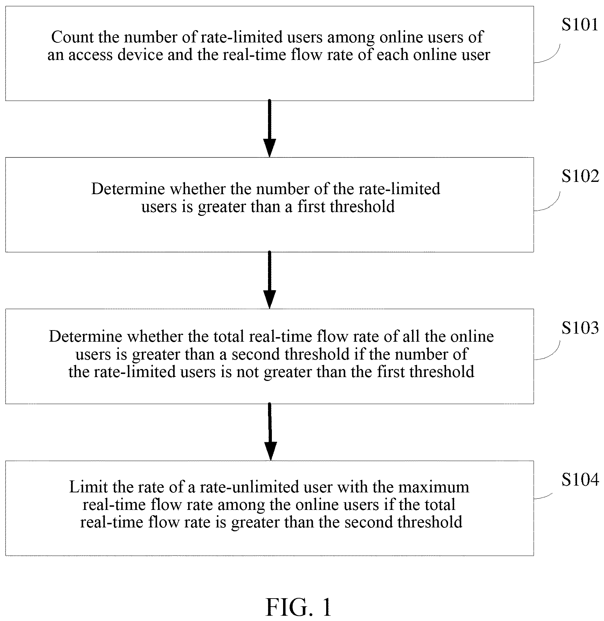

Referring to FIG. 1, an embodiment of the present invention provides a flow control method, applied to an access device and including the following steps.

In Step S101, the number of rate-limited users among online users of an access device and the real-time flow rate of each online user are counted.

In Step S102, whether the number of the rate-limited users is greater than a first threshold is determined.

In Step S103, it is to determine whether the total real-time flow rate of all the online users is greater than a second threshold if the number of the rate-limited users is not greater than the first threshold.

In Step S104, the rate of a rate-unlimited user with the maximum real-time flow rate among the online users is limited if the total real-time flow rate is greater than the second threshold.

According to the flow control method in the embodiment of the present invention, the number of rate-limited users among online users of the access device can be counted and a rate of a rate-unlimited user with the maximum real-time flow rate among the online users is limited according to the total real-time flow rate of all the online users, the problem that a single user occupies a larger bandwidth is avoided so that all the online users can take full advantage of the total bandwidth of the access device, thus improving the user experience.

Furthermore, the first threshold is preset according to the actual situation, for example, preset as 10. Similarly, the second threshold is also preset according to the actual situation, and it is preset as a certain percentage of the total bandwidth of the access device, for example, 80% of the total bandwidth of the access device, which can be selected according to different needs.

In an embodiment of the present invention, the total bandwidth of the access device is set according to the actual situation, for example, the flow and the available total bandwidth, for example, through a medium, and the total bandwidth of the access device is shared by all the online users.

In an embodiment of the present invention, limiting the rate of a rate-unlimited user with the maximum real-time flow rate among the online users may include:
a rate limit of the rate-unlimited user with the maximum real-time flow rate is set as a preset percentage of the total bandwidth of the access device, where the product of the preset percentage and the first threshold is equal to 100%.

For example, when the first threshold is preset to be 10, when the rate of the rate-unlimited user with the maximum real-time flow rate among the online users is limited, the rate limit of the rate-unlimited user with the maximum real-time flow rate needs to be set as 10% of the total bandwidth of the access device. In this way, 10 × 10% = 100%, which indicates that the total bandwidth of the access device has been allocated to all the online users.

It should be noted that the first threshold is a critical point for determining to use a different flow control method.

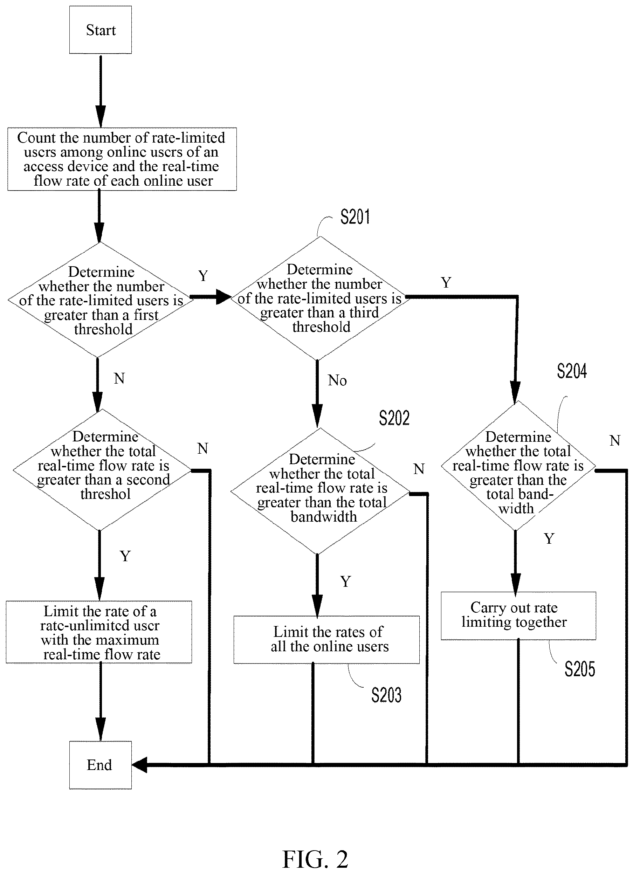

Referring to FIG. 2, the flow control method further includes the following steps.

In Step S201, it is to determine whether the number of the rate-limited users is greater than a third threshold if the number of the rate-limited users is greater than the first threshold.

In Step S202, it is to determine whether the total real-time flow rate of all the online users is greater than the total bandwidth of the access device if the number of the rate-limited users is not greater than the third threshold.

In Step S203, the rates of all the online users are limited if the total real-time flow rate is greater than the total bandwidth of the access device, where the rate limit is a flow rate obtained by dividing the total bandwidth of the access device by the number of all the online users.

Herein, the third threshold is usually a maximum number with which the total bandwidth of the access device can be divided equally, and is also a critical point for determining to use a different flow control method.

Referring to FIG. 2, the flow control method may further include the following steps.

In Step S204, it is to determine whether the total real-time flow rate of all the online users is greater than the total bandwidth of the access device if the number of the rate-limited users is greater than the third threshold.

In Step S205, the rates of both a user with the maximum real-time flow rate among rate-unlimited users and a user with the minimum real-time flow rate among the rate-limited users are limited if the total real-time flow rate is greater than the total bandwidth of the access device, where the flow limit is a flow limit set for the user with the minimum real-time flow rate among the rate-limited users.

In this way, through determining the number of rate-limited users, different rate limiting solutions, i.e., flow control methods, may be used so that all the online users can make full use of the total bandwidth of the access devices to improve the user experience.

In practice, the online users on the access device may constantly change, that is, users keep accessing the device or getting offline. When a new user accesses the access device, the foregoing flow control method in the above embodiment of the present invention is carried out according to the real-time flow rates of all the online users in the access device. After an online user gets offline, it is needed to determine the offline user and restart the flow control.

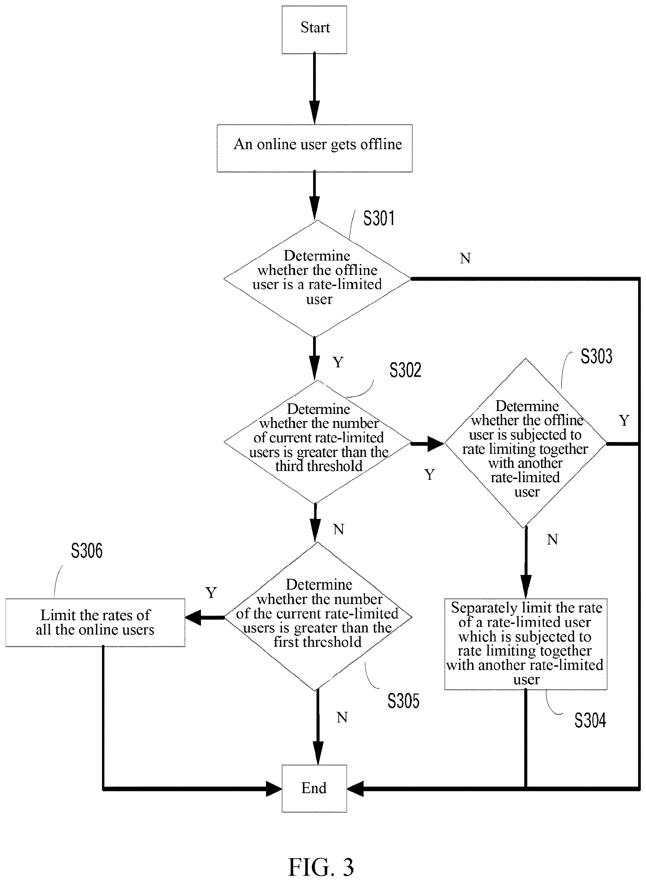

In the embodiment of the present invention, referring to FIG. 3, after an online user gets offline, the flow control method further includes the following steps.

In Step S301, whether the offline user is a rate-limited user is determined.

In Step S302, it is to determine whether the number of current rate-limited users is greater than the third threshold if the offline user is a rate-limited user.

In Step S303, it is to determine whether the offline user is subjected to rate limiting together with another rate-limited user if the number of the current rate-limited users is greater than the third threshold.

In Step S304, the rate of a rate-limited user which is subjected to rate limiting together with another rate-limited user among the current rate-limited users is separately limited if the offline user is not subjected to rate limiting together with another rate-limited user.

Furthermore, the flow control method further includes the following steps.

In Step S305, it is to determine whether the number of the current rate-limited users is greater than the first threshold if the number of the current rate-limited users is not greater than the third threshold.

In Step S306, the rates of all the online users are limited if the number of the current rate-limited users is greater than the first threshold, where the rate limit is a flow rate obtained by dividing the total bandwidth of the access device by the number of all the online users.

In this way, when there is a user getting offline, the real-time flow rates of other online users can be adjusted in time so that all current online users can fully utilize the total bandwidth of the access device to improve the user experience.

An embodiment of the present invention provides a computer storage medium which stores computer-executable instructions for executing the foregoing method.

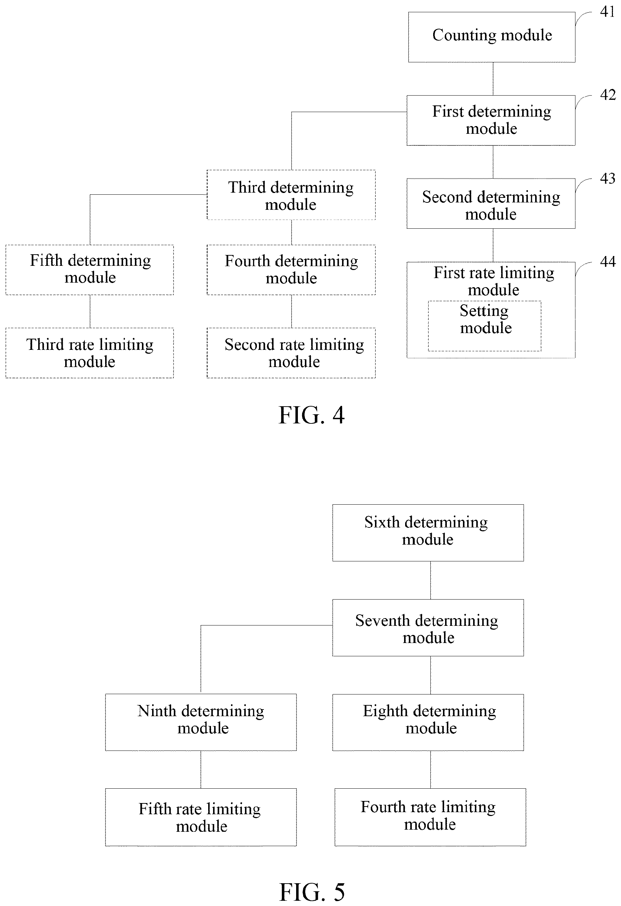

In addition, an embodiment of the present invention further provides a flow control apparatus. As shown in FIG. 4, corresponding to the flow control method shown in FIG. 1, the flow control apparatus may include a counting module 41, a first determining module 42, a second determining module 43, and a first rate limiting module 44.

The counting module 41 is configured to count the number of rate-limited users among online users of an access device and the real-time flow rate of each online user.

The first determining module 42 is configured to determine whether the number of the rate-limited users is greater than a first threshold.

The second determining module 43 is configured to determine whether the total real-time flow rate of all the online users is greater than a second threshold if the number of the rate-limited users is not greater than the first threshold.

The first rate limiting module 44, configured to limit the rate of a rate-unlimited user with the maximum real-time flow rate among the online users if the total real-time flow rate is greater than the second threshold.

By the flow control apparatus in the embodiment of the present invention, the number of rate-limited users among online users of the access device can be counted and the rate of the rate-unlimited user with the maximum real-time flow rate among the online users is limited according to the total real-time flow rate of all the online users. Both the problem that a single user occupies a larger bandwidth and the problem that the bandwidth cannot be fully utilized when there are few users can be avoided and all online users can take full advantage of the total bandwidth of the access device, thus improving the user experience.

In an embodiment of the present invention, the total bandwidth of the access device is set according to the actual situation, for example, the flow and the available total bandwidth, for example, through a medium, and the total bandwidth of the access device is shared by all the online users.

Furthermore, the first threshold is preset according to the actual situation, for example, preset as 10. Similarly, the second threshold is also preset according to the actual situation, and it is preset as a certain percentage of the total bandwidth of the access device, for example, 80% of the total bandwidth of the access device, which can be selected according to different needs.

In an embodiment of the present invention, the first rate limiting module may includes a setting module. The setting module is configured to set a rate limit of the rate-unlimited user with the maximum real-time flow rate as a preset percentage of the total bandwidth of the access device, where the product of the preset percentage and the first threshold is equal to 100%.

In an embodiment of the present invention, the flow control apparatus further includes a third determining module, a fourth determining module, and a second rate limiting module.

The third determining module is configured to determine whether the number of the rate-limited users is greater than a third threshold if the number of the rate-limited users is greater than the first threshold.

The fourth determining module is configured to determine whether the total real-time flow rate of all the online users is greater than the total bandwidth of the access device if the number of the rate-limited users is not greater than the third threshold.

The second rate limiting module is configured to limit the rates of all the online users if the total real-time flow rate is greater than the total bandwidth of the access device, where the rate limit is a flow rate obtained by dividing the total bandwidth of the access device by the number of all the online users.

Herein, the flow control apparatus further includes a fifth determining module and a third rate limiting module.

The fifth determining module is configured to determine whether the total real-time flow rate of all the online users is greater than the total bandwidth of the access device if the number of the rate-limited users is greater than the third threshold.

The third rate limiting module is configured to limit the rates of both a user with the maximum real-time flow rate among rate-unlimited users and a user with the minimum real-time flow rate among the rate-limited users if the total real-time flow rate is greater than the total bandwidth of the access device, where the flow limit is a flow limit set for the user with the minimum real-time flow rate among the rate-limited users.

In this way, through determining the number of rate-limited users, different rate limiting schemes may be used so that all the online users can make full use of the total bandwidth of the access devices to improve the user experience.

In the embodiment of the present invention, as shown in FIG. 5, the flow control apparatus further includes a sixth determining module, a seventh determining module, an eighth determining module, and a fourth rate limiting module.

The sixth determining module is configured to determine whether the offline user is a rate-limited user;

The seventh determining module is configured to determine whether the number of current rate-limited users is greater than the third threshold if the offline user is a rate-limited user.

The eighth determining module is configured to determine whether the offline user is subjected to rate limiting together with another rate-limited user if the number of the current rate-limited users is greater than the third threshold.

The fourth rate limiting module is configured to separately limit the rate of a rate-limited user which is subjected to rate limiting together with another rate-limited user among the current rate-limited users if the offline user is not subjected to rate limiting together with another rate-limited user.

Herein, the flow control apparatus further includes a ninth determining module and a fifth rate limiting module.

The ninth determining module is configured to determine whether the number of the current rate-limited users is greater than the first threshold if the number of the current rate-limited users is not greater than the third threshold.

The fifth rate limiting module is configured to limit the rates of all the online users if the number of the current rate-limited users is greater than the first threshold, where the rate limit is a flow rate obtained by dividing the total bandwidth of the access device by the number of all the online users.

In this way, when there is a user getting offline, the real-time flow rates of other online users can be adjusted in time so that all current online users can fully utilize the total bandwidth of the access device to improve the user experience.

The foregoing is a further detailed description of the invention in connection with the specific embodiments, and it is not intended that the specific embodiments of the present invention are limited to these descriptions.

A person of ordinary skill in the art may understand that all or part of the steps of the foregoing embodiments may be implemented by using a computer program flow, and the computer program may be stored in a computer readable storage medium and is implemented on a corresponding hardware platform (such as a system, equipment, an apparatus, and a device), and when executed, includes one or a combination of the steps of a method embodiment.

All or part of the steps in the foregoing embodiments may also be implemented by using integrated circuits. These steps may be implemented by making these steps into individual integrated circuit modules or making multiple modules or steps thereof into a single integrated circuit module.

Apparatuses / function modules / function units in the foregoing embodiments may be implemented by a general-purpose computing device, and they may be integrated on a single computing device or distributed on a network formed by multiple computing devices.

When the apparatus / functional modules / functional units in the foregoing embodiments are implemented in the form of software functional modules and are sold or used as independent products, they can be stored in a computer readable storage medium. The above-mentioned computer readable storage medium may be a read-only memory, a magnetic disk, an optical disk, or the like.

### Industrial Applicability

According to the foregoing schemes, the number of rate-limited users among online users of the access device can be counted and a rate of a rate-unlimited user among online users with the maximum real-time flow rate is limited according to the total real-time flow rate of all the online users. Both the problem that a single user occupies a larger bandwidth and the problem that the bandwidth cannot be fully utilized when there are few users can be avoided and all online users can take full advantage of the total bandwidth of the access device, thus improving the user experience.

## Claims

1. A flow control method applied to an access device, comprising:
counting (S101) a number of rate-limited users among online users of the access device and a real-time flow rate of each online user;
comprising determining (S102) whether the number of the rate-limited users is greater than a first threshold;
**characterized by**
determining (S103) whether a total real-time flow rate of all the online users is greater than a second threshold when the number of the rate-limited users is not greater than the first threshold; and
setting (S104) a rate limit of a rate-unlimited user with a maximum real-time flow rate among the online users as a preset percentage of a total bandwidth of the access device, when the total real-time flow rate is greater than the second threshold,
wherein a product of the preset percentage and the first threshold is equal to 100%.

2. The flow control method according to claim 1, further comprising:
determining (S201) whether the number of the rate-limited users is greater than a third threshold when the number of the rate-limited users is greater than the first threshold;
determining (S202) whether the total real-time flow rate of all the online users is greater than the total bandwidth of the access device when the number of the rate-limited users is not greater than the third threshold; and
limiting (S203) rates of all the online users when the total real-time flow rate is greater than the total bandwidth of the access device, wherein a rate limit is a flow rate obtained by dividing the total bandwidth of the access device by a number of all the online users.

3. The flow control method according to claim 2, further comprising:
determining (S204) whether the total real-time flow rate of all the online users is greater than the total bandwidth of the access device when the number of the rate-limited users is greater than the third threshold; and
limiting (S205) rates of both a user with a maximum real-time flow rate among rate-unlimited users and a user with a minimum real-time flow rate among the rate-limited users when the total real-time flow rate is greater than the total bandwidth of the access device, wherein the flow limit is a flow limit set for the user with the minimum real-time flow rate among the rate-limited users.

4. The flow control method according to any of claims 1-3, further comprising:
after an online user gets offline, determining (S301) whether the offline user is a rate-limited user;
determining (S302) whether a number of current rate-limited users is greater than the third threshold when the offline user is a rate-limited user;
determining (S303) whether the offline user is subjected to rate limiting together with another rate-limited user when the number of the current rate-limited users is greater than the third threshold; and
separately limiting (S304) a rate of a rate-limited user which is subjected to rate limiting together with another rate-limited user among the current rate-limited users when the offline user is not subjected to rate limiting together with another rate-limited user.

5. The flow control method according to claim 4, further comprising:
determining (S305) whether the number of the current rate-limited users is greater than the first threshold when the number of the current rate-limited users is not greater than the third threshold; and
limiting (S306) the rates of all the online users when the number of the current rate-limited users is greater than the first threshold, wherein the rate limit is a flow rate obtained by dividing the total bandwidth of the access device by the number of all the online users.

6. A flow control apparatus applied to an access device, comprising:
a counting module (41), configured to count a number of rate-limited users among online users of the access device and a real-time flow rate of each online user;
comprising a first determining module (42), configured to determine whether the number of the rate-limited users is greater than a first threshold;
**characterized by** comprising a second determining module (43), configured to determine whether a total real-time flow rate of all the online users is greater than a second threshold when the number of the rate-limited users is not greater than the first threshold; and
a first rate limiting module (44), configured to set a rate limit of a rate-unlimited user with a maximum real-time flow rate among the online users as a preset percentage of a total bandwidth of the access device, when the total real-time flow rate is greater than the second threshold,
wherein a product of the preset percentage and the first threshold is equal to 100%.

7. The flow control apparatus according to claim 6, further comprising:
a third determining module, configured to determine whether the number of the rate-limited users is greater than a third threshold when the number of the rate-limited users is greater than the first threshold;
a fourth determining module, configured to determine whether the total real-time flow rate of all the online users is greater than the total bandwidth of the access device when the number of the rate-limited users is not greater than the third threshold; and
a second rate limiting module, configured to limit rates of all the online users when the total real-time flow rate is greater than the total bandwidth of the access device, wherein a rate limit is a flow rate obtained by dividing the total bandwidth of the access device by a number of all the online users.

8. The flow control apparatus according to claim 7, further comprising:
a fifth determining module, configured to determine whether the total real-time flow rate of all the online users is greater than the total bandwidth of the access device when the number of the rate-limited users is greater than the third threshold; and
a third rate limiting module, configured to limit rates of both a user with a maximum real-time flow rate among rate-unlimited users and a user with a minimum real-time flow rate among the rate-limited users when the total real-time flow rate is greater than the total bandwidth of the access device, wherein the flow limit is a flow limit set for the user with the minimum real-time flow rate among the rate-limited users.

9. The flow control apparatus according to any of claims 6-8, further comprising:
a sixth determining module, configured to determine whether an offline user is a rate-limited user;
a seventh determining module, configured to determine whether a number of current rate-limited users is greater than the third threshold when the offline user is a rate-limited user;
an eighth determining module, configured to determine whether the offline user is subjected to rate limiting together with another rate-limited user when the number of the current rate-limited users is greater than the third threshold; and
a fourth rate limiting module, configured to separately limit a rate of a rate-limited user which is subjected to rate limiting together with another rate-limited user among the current rate-limited users when the offline user is not subjected to rate limiting together with another rate-limited user.

10. The flow control apparatus according to claim 9, further comprising:
a ninth determining module, configured to determine whether the number of the current rate-limited users is greater than the first threshold when the number of the current rate-limited users is not greater than the third threshold; and
a fifth rate limiting module, configured to limit the rates of all the online users when the number of the current rate-limited users is greater than the first threshold, wherein the rate limit is a flow rate obtained by dividing the total bandwidth of the access device by the number of all the online users.

11. A computer storage medium, storing computer-executable instructions for executing the method according to any of claims 1-5.

## Patentansprüche

1. Durchflusssteuerverfahren, das bei einer Zugangsvorrichtung angewendet wird, umfassend:
Zählen (S101) einer Anzahl ratenbegrenzter Benutzer unter Online-Benutzern der Zugangsvorrichtung und einer Echtzeit-Durchflussrate jedes Online-Benutzers;
umfassend Ermitteln (S102), ob die Anzahl der ratenbegrenzten Benutzer größer ist als ein erster Schwellenwert;
**gekennzeichnet durch**
Ermitteln (S103), ob eine gesamte Echtzeit-Durchflussrate aller der Online-Benutzer größer als ein zweiter Schwellenwert ist, wenn die Anzahl der ratenbegrenzten Benutzer nicht größer als der erste Schwellenwert ist; und
Einstellen (S104) eines Ratengrenzwerts eines ratenunbegrenzten Benutzers mit einer maximalen Echtzeit-Durchflussrate unter den Online-Benutzern als einen voreingestellten Prozentsatz einer gesamten Bandbreite der Zugangsvorrichtung, wenn die gesamte Echtzeit-Durchflussrate größer als der zweite Schwellenwert ist,
wobei ein Produkt des voreingestellten Prozentsatzes und des ersten Schwellenwerts gleich 100 % ist.

2. Durchflusssteuerverfahren nach Anspruch 1, weiter umfassend:
Ermitteln (S201), ob die Anzahl der ratenbegrenzten Benutzer größer als ein dritter Schwellenwert ist, wenn die Anzahl der ratenbegrenzten Benutzer größer als der erste Schwellenwert ist;
Ermitteln (S202), ob die gesamte Echtzeit-Durchflussrate aller der Online-Benutzer größer als die gesamte Bandbreite der Zugangsvorrichtung ist, wenn die Anzahl der ratenbegrenzten Benutzer nicht größer als der dritte Schwellenwert ist; und
Begrenzen (S203) von Raten aller der Online-Benutzer, wenn die gesamte Echtzeit-Durchflussrate größer als die gesamte Bandbreite der Zugangsvorrichtung ist, wobei ein Ratengrenzwert eine Durchflussrate ist, die durch Dividieren der gesamten Bandbreite der Zugangsvorrichtung durch eine Anzahl aller der Online-Benutzer erhalten wird.

3. Durchflusssteuerverfahren nach Anspruch 2, weiter umfassend:
Ermitteln (S204), ob die gesamte Echtzeit-Durchflussrate aller der Online-Benutzer größer als die gesamte Bandbreite der Zugangsvorrichtung ist, wenn die Anzahl der ratenbegrenzten Benutzer größer als der dritte Schwellenwert ist; und
Begrenzen (S205) von Raten sowohl eines Benutzers mit einer maximalen Echtzeit-Durchflussrate unter ratenunbegrenzten Benutzern als auch eines Benutzers mit einer minimalen Echtzeit-Durchflussrate unter den ratenbegrenzten Benutzern, wenn die gesamte Echtzeit-Durchflussrate größer ist als die gesamte Bandbreite der Zugangsvorrichtung, wobei der Durchflussgrenzwert ein Durchflussgrenzwert ist, der für den Benutzer mit der minimalen Echtzeit-Durchflussrate unter den ratenbegrenzten Benutzern eingestellt ist.

4. Durchflusssteuerverfahren nach einem der Ansprüche 1-3, weiter umfassend:
sobald ein Online-Benutzer offline geht, Ermitteln (S301), ob der Offline-Benutzer ein ratenbegrenzter Benutzer ist;
Ermitteln (S302), ob eine Anzahl derzeitiger ratenbegrenzter Benutzer größer ist als der dritte Schwellenwert, wenn der Offline-Benutzer ein ratenbegrenzter Benutzer ist;
Ermitteln (S303), ob der Offline-Benutzer einer Ratenbegrenzung gemeinsam mit einem anderen ratenbegrenzten Benutzer unterliegt, wenn die Anzahl der derzeitigen ratenbegrenzten Benutzer größer als der dritte Schwellenwert ist; und
separates Begrenzen (S304) einer Rate eines ratenbegrenzten Benutzers, der einer Ratenbegrenzung gemeinsam mit einem anderen ratenbegrenzten Benutzer unterliegt, unter den derzeitigen ratenbegrenzten Benutzern, wenn der Offline-Benutzer keiner Ratenbegrenzung gemeinsam mit einem anderen ratenbegrenzten Benutzer unterliegt.

5. Durchflusssteuerverfahren nach Anspruch 4, weiter umfassend:
Ermitteln (S305), ob die Anzahl der derzeitigen ratenbegrenzten Benutzer größer ist als der erste Schwellenwert, wenn die Anzahl der derzeitigen ratenbegrenzten Benutzer nicht größer ist als der dritte Schwellenwert; und
Begrenzen (S306) der Raten aller der Online-Benutzer, wenn die Anzahl der derzeitigen ratenbegrenzten Benutzer größer als der erste Schwellenwert ist, wobei die Ratenbegrenzung eine Durchflussrate ist, die durch Dividieren der gesamten Bandbreite der Zugangsvorrichtung durch die Anzahl aller der Online-Benutzer erhalten wird.

6. Durchflusssteuereinrichtung, die bei einer Zugangsvorrichtung angewendet wird, umfassend:
ein Zählermodul (41) das zum Zählen einer Anzahl ratenbegrenzter Benutzer unter Online-Benutzern der Zugangsvorrichtung und einer Echtzeit-Durchflussrate jedes Online-Benutzers konfiguriert ist;
umfassend ein erstes Ermittlungsmodul (42), das zum Ermitteln konfiguriert ist, ob die Anzahl der ratenbegrenzten Benutzer größer ist als ein erster Schwellenwert;
**gekennzeichnet durch** umfassend
ein zweites Ermittlungsmodul (43), das zum Ermitteln konfiguriert ist, ob eine gesamte Echtzeit-Durchflussrate aller der Online-Benutzer größer als ein zweiter Schwellenwert ist, wenn die Anzahl der ratenbegrenzten Benutzer nicht größer als der erste Schwellenwert ist; und
ein erstes Ratenbegrenzungsmodul (44), das zum Einstellen eines Ratengrenzwerts eines ratenunbegrenzten Benutzers mit einer maximalen Echtzeit-Durchflussrate unter den Online-Benutzern als einen voreingestellten Prozentsatz einer gesamten Bandbreite der Zugangsvorrichtung konfiguriert ist, wenn die gesamte Echtzeit-Durchflussrate größer als der zweite Schwellenwert ist,
wobei ein Produkt des voreingestellten Prozentsatzes und des ersten Schwellenwerts gleich 100 % ist.

7. Durchflusssteuereinrichtung nach Anspruch 6, weiter umfassend:
ein drittes Ermittlungsmodul, das zum Ermitteln konfiguriert ist, ob die Anzahl der ratenbegrenzten Benutzer größer als ein dritter Schwellenwert ist, wenn die Anzahl der ratenbegrenzten Benutzer größer als der erste Schwellenwert ist;
ein viertes Ermittlungsmodul, das zum Ermitteln konfiguriert ist, ob die gesamte Echtzeit-Durchflussrate aller der Online-Benutzer größer als die gesamte Bandbreite der Zugangsvorrichtung ist, wenn die Anzahl der ratenbegrenzten Benutzer nicht größer als der dritte Schwellenwert ist; und
ein zweites Ratenbegrenzungsmodul, das zum Begrenzen von Raten aller der Online-Benutzer konfiguriert ist, wenn die gesamte Echtzeit-Durchflussrate größer als die gesamte Bandbreite der Zugangsvorrichtung ist, wobei ein Ratengrenzwert eine Durchflussrate ist, die durch Dividieren der gesamten Bandbreite der Zugangsvorrichtung durch eine Anzahl aller der Online-Benutzer erhalten wird.

8. Durchflusssteuereinrichtung nach Anspruch 7, weiter umfassend:
ein fünftes Ermittlungsmodul, das zum Ermitteln konfiguriert ist, ob die gesamte Echtzeit-Durchflussrate aller der Online-Benutzer größer als die gesamte Bandbreite der Zugangsvorrichtung ist, wenn die Anzahl der ratenbegrenzten Benutzer größer als der dritte Schwellenwert ist; und
ein drittes Ratenbegrenzungsmodul, das zum Begrenzen von Raten sowohl eines Benutzers mit einer maximalen Echtzeit-Durchflussrate unter ratenunbegrenzten Benutzern als auch eines Benutzers mit einer minimalen Echtzeit-Durchflussrate unter den ratenbegrenzten Benutzern konfiguriert ist, wenn die gesamte Echtzeit-Durchflussrate größer ist als die gesamte Bandbreite der Zugangsvorrichtung, wobei der Durchflussgrenzwert ein Durchflussgrenzwert ist, der für den Benutzer mit der minimalen Echtzeit-Durchflussrate unter den ratenbegrenzten Benutzern eingestellt ist.

9. Durchflusssteuereinrichtung nach einem der Ansprüche 6-8, weiter umfassend:
ein sechstes Ermittlungsmodul, das zum Ermitteln konfiguriert ist, ob ein Offline-Benutzer ein ratenbegrenzter Benutzer ist;
ein siebentes Ermittlungsmodul, das zum Ermitteln konfiguriert ist, ob eine Anzahl derzeitiger ratenbegrenzter Benutzer größer ist als der dritte Schwellenwert, wenn der Offline-Benutzer ein ratenbegrenzter Benutzer ist;
ein achtes Ermittlungsmodul, das zum Ermitteln konfiguriert ist, ob der Offline-Benutzer einer Ratenbegrenzung gemeinsam mit einem anderen ratenbegrenzten Benutzer unterliegt, wenn die Anzahl der derzeitigen ratenbegrenzten Benutzer größer als der dritte Schwellenwert ist; und
ein viertes Ratenbegrenzungsmodul, das zum separaten Begrenzen einer Rate eines ratenbegrenzten Benutzers, der einer Ratenbegrenzung gemeinsam mit einem anderen ratenbegrenzten Benutzer unterliegt, unter den derzeitigen ratenbegrenzten Benutzern konfiguriert ist, wenn der Offline-Benutzer keiner Ratenbegrenzung gemeinsam mit einem anderen ratenbegrenzten Benutzer unterliegt.

10. Durchflusssteuereinrichtung nach Anspruch 9, weiter umfassend:
ein neuntes Ermittlungsmodul, das zum Ermitteln konfiguriert ist, ob die Anzahl der derzeitigen ratenbegrenzten Benutzer größer ist als der erste Schwellenwert, wenn die Anzahl der derzeitigen ratenbegrenzten Benutzer nicht größer ist als der dritte Schwellenwert; und
ein fünftes Ratenbegrenzungsmodul, das zum Begrenzen der Raten aller der Online-Benutzer konfiguriert ist, wenn die Anzahl der derzeitigen ratenbegrenzten Benutzer größer als der erste Schwellenwert ist, wobei die Ratenbegrenzung eine Durchflussrate ist, die durch Dividieren der gesamten Bandbreite der Zugangsvorrichtung durch die Anzahl aller der Online-Benutzer erhalten wird.

11. Computerspeichermedium, das computerausführbare Anweisungen zur Ausführung des Verfahrens nach einem der Ansprüche 1-5 speichert.

## Revendications

1. Procédé de commande de flux appliqué à un dispositif d'accès, comprenant :
le comptage (S101) d'un nombre d'utilisateurs limités en débit parmi des utilisateurs en ligne du dispositif d'accès et d'un débit de flux en temps réel de chaque utilisateur en ligne ;
comprenant la détermination (S102) indiquant si le nombre des utilisateurs limités en débit est supérieur à un premier seuil ;
**caractérisé par**
la détermination (S103) indiquant si un débit de flux en temps réel total de tous les utilisateurs en ligne est supérieur à un deuxième seuil lorsque le nombre des utilisateurs limités en débit n'est pas supérieur au premier seuil ; et
la définition (S104) d'une limite de débit d'un utilisateur limité en débit avec un débit de flux en temps réel maximal parmi les utilisateurs en ligne en tant qu'un pourcentage prédéfini d'une largeur de bande totale du dispositif d'accès, lorsque le débit de flux en temps réel total est supérieur au deuxième seuil,
dans lequel un produit du pourcentage prédéfini et du premier seuil est égal à 100%.

2. Procédé de commande de flux selon la revendication 1, comprenant en outre :
la détermination (S201) indiquant si le nombre des utilisateurs limités en débit est supérieur à un troisième seuil lorsque le nombre des utilisateurs limités en débit est supérieur au premier seuil ;
la détermination (S202) indiquant si le débit de flux en temps réel total de tous les utilisateurs en ligne est supérieur à la largeur de bande totale du dispositif d'accès lorsque le nombre des utilisateurs limités en débit n'est pas supérieur au troisième seuil ; et
la limitation (S203) de débits de tous les utilisateurs en ligne lorsque le débit de flux en temps réel total est supérieur à la largeur de bande totale du dispositif d'accès, dans lequel une limite de débit est un débit de flux obtenu en divisant la largeur de bande totale du dispositif d'accès par un nombre de tous les utilisateurs en ligne.

3. Procédé de commande de flux selon la revendication 2, comprenant en outre :
la détermination (S204) indiquant si le débit de flux en temps réel total de tous les utilisateurs en ligne est supérieur à la largeur de bande totale du dispositif d'accès lorsque le nombre des utilisateurs limités en débit est supérieur au troisième seuil ; et
la limitation (S205) de débits à la fois d'un utilisateur avec un débit de flux en temps réel maximal parmi des utilisateurs limités en débit et d'un utilisateur avec un débit de flux en temps réel minimal parmi les utilisateurs limités en débit lorsque le débit de flux en temps réel total est supérieur à la largeur de bande totale du dispositif d'accès, dans lequel la limite de flux est une limite de flux définie pour l'utilisateur avec le débit de flux en temps réel minimal parmi les utilisateurs limités en débit.

4. Procédé de commande de flux selon l'une quelconque des revendications 1 à 3, comprenant en outre :
après qu'un utilisateur en ligne est devenu hors ligne, la détermination (S301) indiquant si l'utilisateur hors ligne est un utilisateur limité en débit ;
la détermination (S302) indiquant si un nombre d'utilisateurs limités en débit courants est supérieur au troisième seuil lorsque l'utilisateur en ligne est un utilisateur limité en débit ;
la détermination (S303) indiquant si l'utilisateur hors ligne est soumis à une limitation de débit avec un autre utilisateur limité en débit lorsque le nombre des utilisateurs limités en débit courants est supérieur au troisième seuil ; et
la limitation de manière séparée (S304) d'un débit d'un utilisateur limité en débit qui est soumis à une limitation de débit avec un autre utilisateur limité en débit parmi les utilisateurs limités en débit courants lorsque l'utilisateur hors ligne n'est pas soumis à une limitation de débit avec un autre utilisateur limité en débit.

5. Procédé de commande de flux selon la revendication 4, comprenant en outre :
la détermination (S305) indiquant si le nombre des utilisateurs limités en débit courants est supérieur au premier seuil lorsque le nombre des utilisateurs limités en débit courants n'est pas supérieur au troisième seuil ; et
la limitation (S306) des débits de tous les utilisateurs en ligne lorsque le nombre des utilisateurs limités en débit courants est supérieur au premier seuil, dans lequel la limite de débit est un débit de flux obtenu en divisant la largeur de bande totale du dispositif d'accès par le nombre de tous les utilisateurs en ligne.

6. Appareil de commande de flux appliqué à un dispositif d'accès, comprenant :
un module de comptage (41), configuré pour compter un nombre d'utilisateurs limités en débit parmi des utilisateurs en ligne du dispositif d'accès et un débit de flux en temps réel de chaque utilisateur en ligne ;
comprenant un premier module de détermination (42), configuré pour déterminer si le nombre des utilisateurs limités en débit est supérieur à un premier seuil ;
**caractérisé en ce qu'**il comprend
un deuxième module de détermination (43), configuré pour déterminer si un débit de flux en temps réel total de tous les utilisateurs en ligne est supérieur à un deuxième seuil lorsque le nombre des utilisateurs limités en débit n'est pas supérieur au premier seuil ; et
un premier module de limitation de débit (44), configuré pour définir une limite de débit d'un utilisateur non limité en débit avec un débit de flux en temps réel maximal parmi les utilisateurs en ligne en tant qu'un pourcentage prédéfini d'une largeur de bande totale du dispositif d'accès, lorsque le débit de flux en temps réel total est supérieur au deuxième seuil,
dans lequel un produit du pourcentage prédéfini et du premier seuil est égal à 100%.

7. Appareil de commande de flux selon la revendication 6, comprenant en outre :
un troisième module de détermination, configuré pour déterminer si le nombre des utilisateurs limités en débit est supérieur à un troisième seuil lorsque le nombre des utilisateurs limités en débit est supérieur au premier seuil ;
un quatrième module de détermination, configuré pour déterminer si le débit de flux en temps réel total de tous les utilisateurs en ligne est supérieur à la largeur de bande totale du dispositif d'accès lorsque le nombre des utilisateurs limités en débit n'est pas supérieur au troisième seuil ; et
un deuxième module de limitation de débit, configuré pour limiter des débits de tous les utilisateurs en ligne lorsque le débit de flux en temps réel total est supérieur à la largeur de bande totale du dispositif d'accès, dans lequel une limite de débit est un débit de flux obtenu en divisant la largeur de bande totale du dispositif d'accès par un nombre de tous les utilisateurs en ligne.

8. Appareil de commande de flux selon la revendication 7, comprenant en outre :
un cinquième module de détermination, configuré pour déterminer si le débit de flux en temps réel total de tous les utilisateurs en ligne est supérieur à la largeur de bande totale du dispositif d'accès lorsque le nombre des utilisateurs limités en débit est supérieur au troisième seuil ; et
un troisième module de limitation de débit, configuré pour limiter des débits à la fois d'un utilisateur avec un débit de flux en temps réel maximal parmi des utilisateurs non limités en débit et d'un utilisateur avec un débit de flux en temps réel minimal parmi les utilisateurs limités en débit lorsque le débit de flux en temps réel total est supérieur à la largeur de bande totale du dispositif d'accès, dans lequel la limite de flux est une limite de flux définie pour l'utilisateur avec le débit de flux en temps réel minimal parmi les utilisateurs limités en débit.

9. Appareil de commande de flux selon l'une quelconque des revendications 6 à 8, comprenant en outre :
un sixième module de détermination, configuré pour déterminer si un utilisateur hors ligne est un utilisateur limité en débit ;
un septième module de détermination, configuré pour déterminer si un nombre d'utilisateurs limités en débit courants est supérieur au troisième seuil lorsque l'utilisateur hors ligne est un utilisateur limité en débit ;
un huitième module de détermination, configuré pour déterminer si l'utilisateur hors ligne est soumis à une limitation de débit avec un autre utilisateur limité en débit lorsque le nombre des utilisateurs imités en débit courants est supérieur au troisième seuil ; et
un quatrième module de limitation de débit, configuré pour limiter de manière séparée un débit d'un utilisateur limité en débit qui est soumis à une limitation de débit avec un autre utilisateur limité en débit parmi les utilisateurs limités en débit courants lorsque l'utilisateur hors ligne n'est pas soumis à une limitation de débit avec un autre utilisateur limité en débit.

10. Appareil de commande de flux selon la revendication 9, comprenant en outre :
un neuvième module de détermination, configuré pour déterminer si le nombre des utilisateurs limités en débit courants est supérieur au premier seuil lorsque le nombre des utilisateurs limités en débit courants n'est pas supérieur au troisième seuil ; et
un cinquième module de limitation de débit, configuré pour limiter les débits de tous les utilisateurs en ligne lorsque le nombre des utilisateurs limités en débit courants est supérieur au premier seuil, dans lequel la limite de débit est un débit de flux obtenu en divisant la largeur de bande totale du dispositif d'accès par le nombre de tous les utilisateurs en ligne.

11. Support de stockage pour ordinateur, stockant des instructions exécutables par ordinateur permettant d'exécuter le procédé selon l'une quelconque des revendications 1 à 5.
